# EUROPEAN PATENT APPLICATION

(11) **EP 2 131 550 A1**
(43) Date of publication of application: **09.12.2009**
(21) Application number: 08305225.8
(22) Date of filing: 03.06.2008
(51) Int. Cl.: H04L 29/06

(54) **method of transmitting a list of services and corresponding method of reception**

(71) Applicant: THOMSON Licensing, 92100 Boulogne-Billancourt (FR)
(72) Inventor: Mischler, Denis, 35235, THORIGNE FOUILLARD (FR); Gerard, Francois, 56800, PLOERMEL (FR); Henry, Jean-Baptiste, 35520, MELESSE (FR)
(74) Representative: Ruellan-Lemonnier, Brigitte

(57) **Abstract**

The invention enables the transmission and the reception of an aggregated list of services for a user, the aggregated list of services comprising a complete list of services that are associated to a user, such as "own" services and operator-provided services.

## Description

### 1. Field of invention.

The invention relates to the field of telecommunication and more particularly, to the transmission and the reception of an aggregated list of references to services.

### 2. Technical background.

According to the state of the art, a user of services (here: "user") has an end user device connected to an operator network.

A service can be represented by content, such as audio, video, text or data, or by an access service, such as access to a telephone service, or access to a distant data store service.

A service is provided for example by a node of a peer-to-peer network, an internet provider, a telephone service provider, an IPTV (Internet Protocol TeleVision) operator and/or an own device.

The service can have a multitude of characteristics, such as display resolution, encoding format, bit rate, and scrambling algorithm used for access control.

A user of services can have a multitude of devices capable of using or providing services. These devices can have a multitude of characteristics, such as display resolution and decoding capacity. For example, these devices include mobile devices such as a mobile telephone that can connect to a Wi-Fi (according to the IEEE 802.11 standard), DECT (Digital Enhanced Cordless Telecommunications, according to the ETSI TS 300 175 standard) or 3GPP (3^{rd} Generation Partnership Project) wireless network or a portable PC that can connect to a wired IP (Internet Protocol) or to a wireless Wi-Fi network.

Thus, some services may not be suited to be provided to some devices because of technical, commercial or other limitations imposed by for example the end user device, the user, the providing network, and/or the service provider.

Some services may occur more than once, for example when a same service is provided by different sources such as a tv channel present on a digital terrestrial network and on a cable network.

What is true for services is also true for service lists; these exist in many forms and are obtained via various ways. For example, for services that are accessed via the internet, a service list is fetched from a web page in the HTML (HyperText Mark-up Language) format on a specific URL (Universal Resource Locator). For services that are provided via an operator of IPTV (Internet Protocol TeleVision) over an operator network, a service list is provided in the XML (extensible Mark-up Language) format and can be retrieved by listening on a specific multicast address. For services that are provided via a peer-to-peer network, a protocol specific to the peer-to-peer network allows to retrieve a service list in an XML format that is not the same as the XML format used by the IPTV operator.

The prior art does not provide coherent access for a user to this multitude of services to be used on a multitude of end user devices.

Because of the widespread use of mobile devices, consuming services has acquired a nomadic character. Users want to access to their services (e.g. services provided by their devices, their peer-to-peer network, their operator), wherever they are, and on whatever end user device.

So-called managed network domains, such as operator networks, are more often based on IP technology, and access networks and home networks can use IP as a transport layer. The IMS (IP Multimedia Subsystem) and ETSI TISPAN architecture is emerging in this context as a network architecture that spans from the managed network domain of an operator to the home network domain of a user. End user devices can then use IMS information and signaling flows to deliver services to a final destination. IMS defines a set of specifications from 3GPP for delivering IP multimedia to mobile users. ETSI TISPAN is a European standardization body and defines the architecture for ADSL and Wi-Fi access networks on the basis of existing IMS specifications. See ETSI TISPAN TS 185 009, ETSI TISPAN TS189 003 "Customer Network Gateway (CNG) architecture and Reference Points" and TS185 006 "Customer Devices Architecture and Reference Points" which specify a functional architecture for IMS based IPTV devices.

The prior art does not provide a means to provide access, for a user, to his services, wherever the user is, and on whichever end user device.

### 3. Summary of the invention.

The present invention aims at alleviating the inconveniences of

### prior art.

More specifically, the invention enables the transmission and the reception of an aggregated list of services for a user, the aggregated list of services comprising a complete list of services that are associated to a user, such as "own" services and operator-provided services.

The method relates more particularly to a method of transmitting a list of services. It comprises:
- a step of reception of a request for an aggregated list of services associated to a user, the request comprising information representative of the user and information representative of an end user device for using the aggregated list of services associated to a user;
- a step of creation of a first list of services provided by at least one operator and accessible for the user;
- a step of reception of the at least a second list of services associated to said user; and
- a step of transmission to said end user device, of the aggregated list, the aggregated list comprising references to services identified in the first list and references to services identified in said at least a second list.

The method also relates to a method of reception of an aggregated list of services. The method comprises:
- a step of transmission of a request for aggregated list of services associated to a user, comprising information representative of the user and information representative of an end user device for using said aggregated list of services associated to the user;
- a step of reception of a request for a list of services associated to the user;
- a step of transmission of a list of services associated to the user;
- a step of reception of the aggregated list, the aggregated list comprising references to services identified in the list of services associated to the user and references to operator-provided services.

Here, the term "service" means any type of service such as content-type services like audio, video, text or data, or access type services, such as a telephone service or a distant data store service.

Here, the term "user" means user of services, represented by a physical person. A user is identified by information representative of a user, such as a user ID and/or user address.

Here, the term "end user device of the user" means a device that is owned or rent by the user. There are many ways of determining the end user devices of the user. For example, the devices can be found by using a correspondence table between a user and the address of end user devices of the user stored in a database, or an information representative of the end user devices of the user may be comprised in the request for an aggregated list of services.

Here, the term "end user device" is a generic term to indicate any device that can be used by a user, and comprises functions of using services and providing services. Examples of end user devices are: a gateway, a personal computer, a telephone, a mobile telephone, a DTT (Digital Terrestrial Television) decoder, a satellite receiver, an IPTV receiver, a TV set, a storage device, a home server, a PVR (Personal Video Recorder), a camera, a webcam.

Here, the term "services associated to the user" means services that are available to the user, comprising services originating from one or more of the devices of the user, and/or services originating from devices of other users to which the user has access, and/or services provided by at least one operator, comprising services to which the user has a subscription and services that are freely available without subscription.

Here, the term "operator" means an operator or provider of services and aggregated list of services.

Here, the word "accessible" in "accessible service": a service is accessible by an end user device if it can be used by it. For example, according to a particular embodiment, a service is accessible when a user has subscribed to it; according to another embodiment, service is accessible when the service is freely available..

Here, the term "requesting device" is used to indicate the device that requests the aggregated list of services.

Here, the term "end user device for using the aggregated list of services" is used to indicate the end user device that is used to use the aggregated list of services, for example to show or to store the aggregated list.

Here, the term "end user device for using services referenced in the aggregated list of services" is used to indicate the device that is used to use services referenced in the aggregated list of services.

Here, the term "community" means a network of devices such as from friends or relations, that are able to provide services to a user and to which the user's devices are able to provide services.

Here, the term "alternate operator" means another operator than the operator to which the user device is directly connected.

According to a particular embodiment of the invention, the method of transmitting a list of services comprises a step of interrogation of at least one device of the user for at least one second list of services associated to the user.

According to a particular embodiment of the invention, the step of transmission of the aggregated list comprises a step of transmission, to an alternate operator, of a request for an aggregated list of services associated to the user, the request comprising information representative of the user and information representative of an end user device for using the aggregated list of services associated to the user and a step of reception of the aggregated list of services comprising references to services available to the user via the alternate operator. This feature allows for example to forward a request for an aggregated list to an alternate operator and to receive a forwarded transmission of an aggregated list from such an alternate operator.

According to a particular embodiment of the invention, the request for an aggregated list comprises information allowing the identification of an end user device for using the services that are listed in the aggregated list. This allows differentiating the requesting device from the using device. With this feature one can for example show the list of services on a mobile telephone (the requesting device), and use a large screen for using the service itself (the using device). Or, one can for example show the list of services on a large screen (the requesting device), and show the services on a mobile telephone (the using device).

According to a particular embodiment of the invention, the step of transmission of the aggregated list comprises a step of filtering references to services from the first and the at least one second list. This feature allows removing services from the said lists.

According to a particular embodiment of the invention, the step of filtering references to services comprises elimination of references to services that are identical. This feature allows to remove references to services that, for example, represent the same content, or that have the same name.

According to a particular embodiment of the invention, the filtering step comprises suppression of references to services that can not be used by the end user device, because they exceed the transmission capabilities of a network to which the end user device is connected. For example, a service has a bit rate which exceeds the transmission capacity of an access network or a contribution network. This feature allows adapting the services of the aggregated list of services to the technical possibilities of the end user device that will use the service.

Here, the term "aggregation" means a set of operations comprising concatenation and conversion of references to services.

According to a particular embodiment of the invention, the conversion of references to services comprises a conversion of their format according to the using capability of the end user device using the list. This allows conversion of an entire service list or elements of a service list to a particular format that is accepted by or best suited for the using device. According to a particular embodiment, the information representative of an end user device for using said aggregated list is used for any one, or a combination of, the following actions:
- conversion of the format of the list, for example, HTML or XML;
- conversion of the presentation format to the using dev ice, for example for using on a low (e.g. for a mobile phone) or high resolution (e.g. for a home cinema) screen;
- conversion of the encoding format, e.g. conversion of an H.264 encoded video service to an MPEG2 encoded service;
- conversion of the bit rate, e.g. conversion of a 8Mbit/s encoded video service to a 2 Mbit/s encoded service;
- conversion of the file format, e.g. conversion of a LaTeX document into a plain-text ASCII document;
- conversion of media, e.g. conversion of a text document to speech;
- conversion of the transmission protocol for transmitting the aggregated list to the using device, for example unicast or multicast.

According to a particular embodiment of the invention, the step of filtering references to services comprises elimination of references to services that can not be provided to the end user device because the end user device does not have the protocol stack installed that is needed to use the services. This feature allows to remove references to services that the end user can not use.

According to a particular embodiment, the operator network is compatible with IMS (see the above cited TISPAN document references). In terms of IMS, the service list aggregator can then be implemented in the customer network gateway (CNG) and in the application server (AS), which interconnect with the IP Management System via a normalized interface ISC (IMS Service Control).

### 4. List of figures.

More advantages of the invention will appear through the description of particular, non-restricting embodiments of the invention. The embodiments will be described with reference to the following figures:
- Figure 1 shows a n example of a network infrastructure that is compatible with the invention and that includes an end user device in an USB (Universal Serial Bus) based home network;
- Figure 2 shows a second example of a network infrastructure that is compatible with the invention, and that includes an end user device in an UPnP AV (Universal Plug and Play - Audio and Video) based home network. The UPnP AV standardization body is a grouping within the UPnP standards supervised by DLNA (Digital Living Network Alliance);
- Figure 3 shows a message exchange between the devices of the network infrastructure of figure 2, according to a first embodiment of the invention;
- Figure 4 shows a third example of a network infrastructure that is compatible with the invention and includes a community and a second operator;
- Figure 5 shows an example of message exchanges between the devices of the network infrastructure of figure 4, according to a second embodiment of the invention;
- Figure 6 shows a fourth example of a network infrastructure that is compatible with the invention and that includes a receiving device connected to a second operator network;
- Figure 7 shows an example message of message exchanges between the devices of the network infrastructure of figure 6, according to a third embodiment of the invention;
- Figure 8 shows a fifth example of a network infrastructure that is compatible with the invention and that shows a fourth embodiment of the invention;
- Figure 9 shows an example embodiment of a transmitting device compatible with the invention;
- Figure 10 shows an example embodiment of a receiving device compatible with the invention;
- Figure 11 shows an algorithm of a method of transmission compatible with the invention; and
- Figure 12 shows an algorithm of a method of reception compatible with the invention.

### 5. Detailed description of the invention.

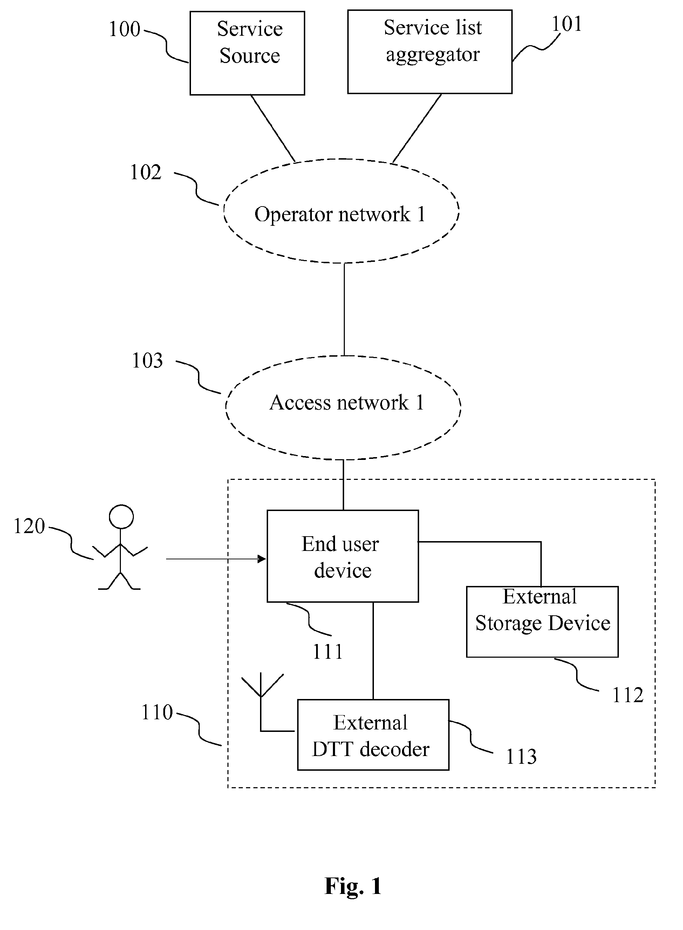

**Figure 1** shows a diagram of an example network infrastructure with a home network that is compatible with the invention.

The infrastructure comprises:
- a service source 100 ;
- a service list aggregator 101;
- an operator network 102 to which service source 100 and service list aggregator 101 are connected;
- an access network 103, connected to operator network 102; and
- a home network 110;

The home network 110 comprises:
- an end user device 111, connected to access network 103;
- a n external storage device 112 connected to end user device 111; and
- an external DTT decoder device 113 connected to end user device 111.

A user 120 is commanding end user device 111.

Service source 100 provides service via operator network 102 and access network 103 to end user device 111. End user device 111 is adapted to get input commands from user 120, via an input means, for example a remote control, a keyboard or a touchscreen, to connect to the access network 103, to request and receive a service list from service list aggregator 101 , and to use services referenced in that list, provided by source 100.

End user device 111 is further connected to external DTT decoder 113 (DTT = Digital Terrestrial Television) and to external storage device 112. DTT decoder 113 is capable of receiving video and audio services from digital terrestrial emissions and is commanded by user 120 via end user device 111. Furthermore, the storage device 112 provides stored services to end user device 111.

End user device 111 is further adapted to command storage device 112, in order to retrieve and store services.

The connection of DTT decoder 113 and the connection of storage device 112 to end user device 111 can be seen as a home network 110. As an example, such a home network may be based on the USB 2.0 standard.

According to a particular embodiment of the invention, the connection of the end user device 111 to the access network 103 is of the ADSL type.

According to a particular embodiment of the invention, the end user device 111 is a personal computer.

According to a particular embodiment of the invention, the end user device 111 has an interface of type ADSL that allows it to connect to access network 103.

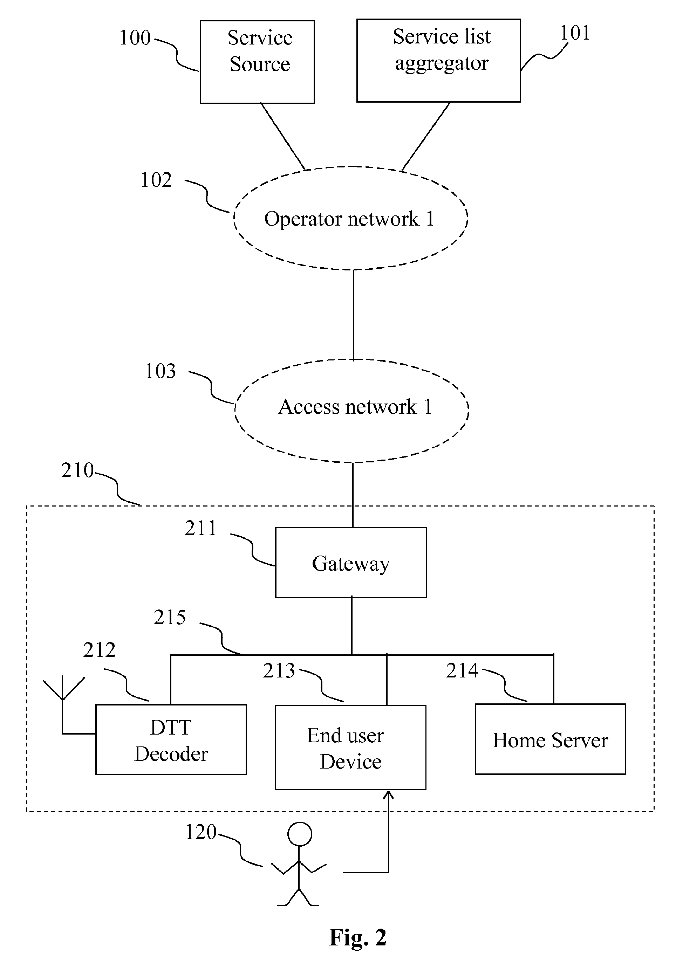

**Figure 2** shows a diagram of an alternate example network infrastructure and home network that is compatible with the invention.

The infrastructure comprises elements 100, 101, 102 and 103 that have already been described for figure 1 and that have a similar function here, and are thus not described again.

The infrastructure comprises furthermore a home network 210.

The home network 210 comprises:
- a gateway 211, connected to the access network 103;
- a home network bus 215, connected to the gateway 211;
- a n end user device 213, connected to gateway 211 via home network bus 215;
- a DTT decoder 212, also connected to gateway 211 via home network bus 215; and
- a home server device 214, also connected to gateway 211 via home network bus 215.

A user 120 commands end user device 213 via an input means.

Service source 100 provides services via operator network 102 and access network 103 and gateway 211 to the end user device 213. End user device 213 is adapted to get input commands from user 120, is adapted to request and receive a service list from service list aggregator 101, and is adapted to use services referenced in that list, provided by source 100.

The DTT decoder 212, the end user device 213, the home server device 214 and gateway 211 are interconnected in a home network via network bus 215. As an example, such a home network may be based on the UPnP AV standard.

Gateway 211 provides bidirectional access to the access network for devices 212, 213 and 214, and as such is an interface between the access network and the home network. In such a type of network, each device can use the other devices of the home network.

Thus, end user device 213 is connected to DTT decoder 212 and to home server device 214. DTT decoder 212 is capable of receiving video and audio services from digital terrestrial emissions. The home server device 214 is able to provide stored services to the devices in the home network such as to end user device 213, or to store services from DTT decoder 212 or end user device 213.

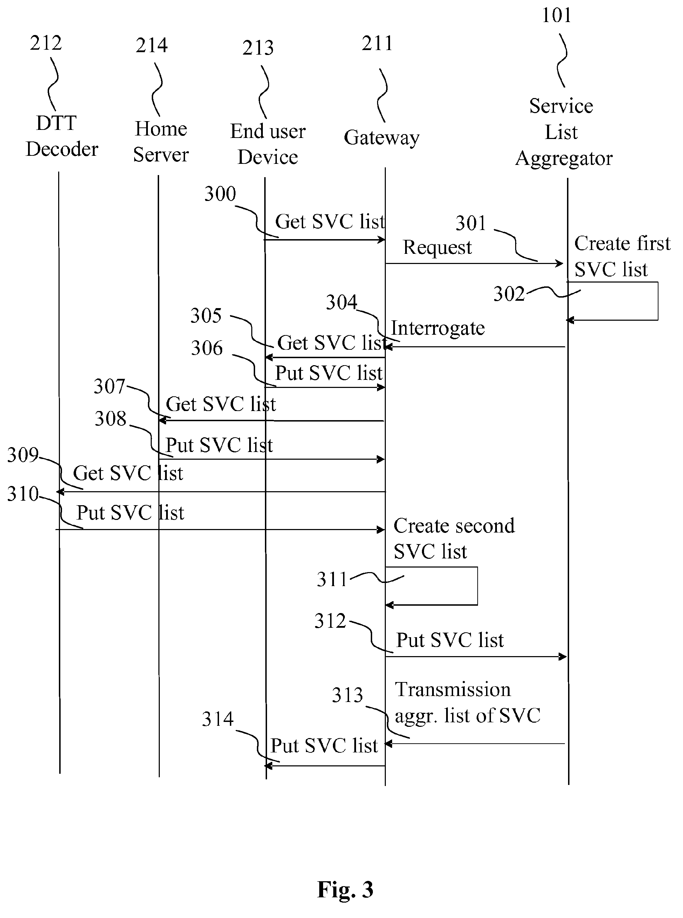

The dynamic cooperation between these devices in this example embodiment of the invention is illustrated by figure 3.

**Figure 3** shows a sequence diagram of messages and operations of the devices illustrated in figure 2 according to a first embodiment of the invention, comprising an interrogation step

The diagram comprises, from left to right:
- DTT decoder 212;
- Home Server 214;
- End user device 213;
- Gateway 211; and
- Service list aggregator 101.

The sequence diagram starts with a demand 300 for an aggregated list of services to gateway 211.

Consequently, gateway 211 sends a request 301 for an aggregated list of services associated to user 120 which is sent from gateway device 211 to service list aggregator 101. The service list aggregator 101 reads information representative of the user from the request, thereby allowing it to identify the user. Furthermore, service list aggregator 101 reads information representative of an end user device from the request, allowing it to identify the device that is to use the aggregated list of services, in this case end user device 213.

Based on the identification of the user, the service list aggregator 101 creates a first service list , illustrated by 302. This first service list comprises references to operator-provided services that are accessible to the user 120.

After construction of this first service list, the service list aggregator 101 interrogates at least one device of the user 120 for at least one second list of services that is associated to the user, via message 304.

Then the gateway 211 demands lists of services via messages 305, 307 and 309, from respectively the end user device 213, home server 214 and DTT decoder 212. The devices 213 (end user device), 214 (home server), and 212 (DTT receiver) reply with messages 306, 308 and 310, by which they send their list of services to the gateway 211.

Upon reception of the messages 306, 308 and 310, the gateway 211 creates a second list of services illustrated by 311.

According to a particular embodiment, at least one reply message 306, 308 or 310 and more precisely one, two or three are needed for the creation of the second list if all replies have not been received after a timeout.

Then, gateway 211 transmits the second list to service list aggregator 101 via message 312.

After reception of this list, the service list aggregator transmits an aggregated list of service, comprising references to services identified in first and at least one second lists in a message 313 which is forwarded to user device 213 with message 314.

According to a particular embodiment of the invention, the request 301 for an aggregated list of services is not triggered by a demand 300 from the end user device 213, but is done periodically, in order to maintain an updated list in gateway device 211. In such a case, a demand for an aggregated list of services from end user device 211 can be satisfied within a reduced delay.

According to a particular embodiment of the invention, at least one and more precisely one, two or three demands 305, 307 and 309 from the gateway 211 to respectively the end user device 213, home server 214 and DTT receiver 212 are not executed upon reception of an interrogation 304 from the service list aggregator 101 to gateway 211. Their execution is done periodically by the gateway, in order to maintain an updated list of services that the devices 212, 214 and 213 provide, in gateway 211. This allows reducing the delay between the interrogation 304 from the service list aggregator 101 and the sending 310 of the list to the service list aggregator.

According to a particular embodiment of the invention, the devices 212, 214 and 213 send updated lists periodically to gateway 211, or send once when something changes. This allows the gateway to be updated at any time, without the need to interrogate the devices regularly.

According to a particular embodiment of the invention, the demand 300 comprise s a list of services provided by the end user device itself, thereby avoiding the need for the gateway to send demand 305, and thereby avoiding the end user device to send the answer 306, and thus allowing to reduce the delay introduced by the demand/answer messages.

According to a particular embodiment of the invention, the request 301 comprises the list of services provided by the user's devices, which removes the need for the service list aggregator 101 to send interrogation message 304.

According to a particular embodiment of the invention, the end user device has an interface adapted to direct connection to the access network and does not use a gateway, and thus communicates directly with the service list aggregator and the other devices in the local network.

According to a particular embodiment of the invention, the transmission of the aggregated list of services to end user device 213 comprises a step of filtering references to services from the first service list created at 302 and the at least one second list represented by the message 312.

According to a particular embodiment of the invention, this step of filtering comprises elimination of references to services that are identical. A service can be considered as identical for example, when service is bit-wise the same, or when service has the same name, or when service represents the same content (for example a same tv program). Of course, any combination of these example criteria is possible.

According to a particular embodiment of the invention, the step of filtering comprises elimination of references to services that can not be used because of they exceed the using capabilities of the end user device 213. For example, references to services may refer to services that are encoded with an encoding algorithm that is not supported by device 213, or may refer to service that is encoded with a variable bit rate encoding, that exceeds the using capacity of device 213, because device only supports constant-bit rate encoded services. For example, references to service may refer to text content in a format that is not supported by device 213.

According to a particular embodiment of the invention, the step of filtering comprises elimination of references to services that can not be used by device 213 because they exceed the transmission capabilities of the access network 103 to which device 213 is connected. For example, a service reference may refer to a service that is encoded with a bit rate that exceeds the transmission capabilities of access network 103.

According to a particular embodiment of the invention, the step of filtering comprises elimination of references to services that can not be provided by device 213 because device 213 does not have the required protocol stack installed that is needed to use the services.

This sequence diagram also shows the method of reception of an aggregated list of services, comprising:
- a step of transmission of a request 301 for an aggregated list of services associated to a user, comprising information representative of the user 120 and information representative of an end user device 213 for using the aggregated list of services associated to the user 120;
- a step of reception of a request 304, for a list of services associated to the user 120;
- a step of transmission 312 of a list of services associated to the user 120; and
- a step of reception 313 of said aggregated list, the aggregated list comprising references to services identified in said list 312 of services associated to said user 120 and references to operator-provided services.

According to a particular embodiment of the invention, the device creating the second list of services associated to a user comprises a function that can execute an aggregation step of service lists. For example, gateway 211 has such a function.

According to a particular embodiment of the invention, this aggregation step comprises a filtering step of references to service associated to the user.

According to a particular embodiment of the invention, this step of filtering comprises elimination of references to services that are identical. A service can be considered as identical for example, when a service is bit-wise the same, or when a service has the same name, and/or when service represents the same (for example a same tv program). Of course, any combination of these example criteria is possible.

According to a particular embodiment of the invention, this step of filtering comprises elimination of references to services that can not be used because of they exceed the using capabilities of the using device 213. For example, the service list received from DTT receiver 212 may refer to services that are encoded with an encoding algorithm that is not supported by device 213, or may refer to services that are encoded with a variable bit rate encoding, that exceeds the using capability of device 213, because the device only supports constant-bit rate encoded services. For example, the service list received from home server 214 may comprise references to text content that is encoded in a format that is not supported by device 213.

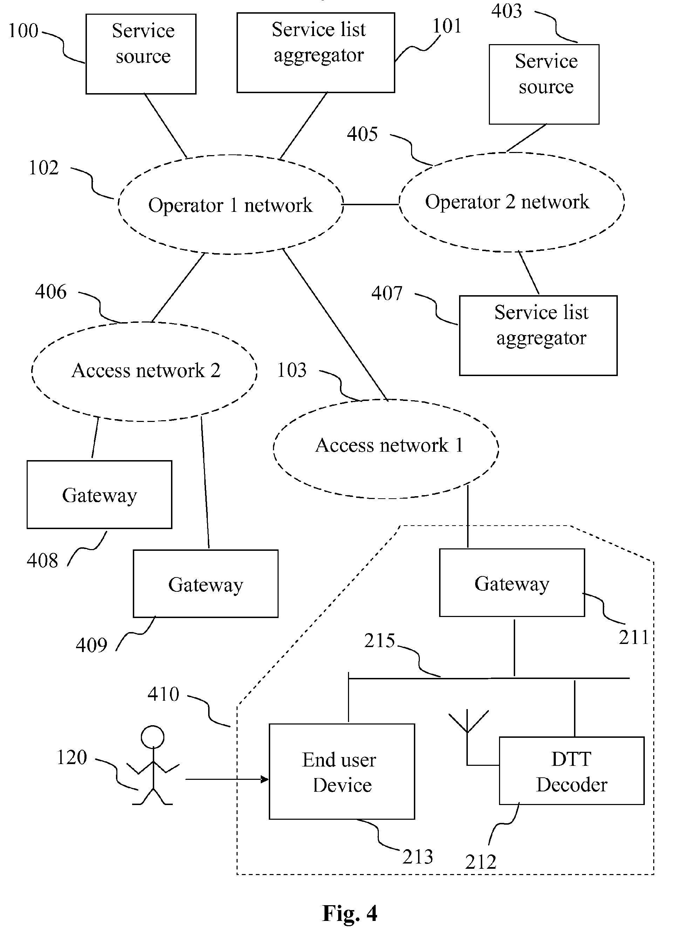

**Figure 4** shows a more complex network infrastructure with home network according to a second embodiment of the invention.

The infrastructure comprises elements 100, 101, 102, 103, 120, 211, 212, 213 and 215 that have already been described under figures 1, 2, and 3 and that execute a similar function here, and are thus not described further. The home network 410 comprises the same elements as described under figure 2 with the exception of home server 214 that is not included in home network 410 in order to reduce the complexity of the figure.

The infrastructure comprises furthermore:
- A second operator network 405, connected to operator 1 network 102;
- A second access network 406, connected to operator 1 network 102;
- A second service source 403, connected to second operator network 405;
- A second service list aggregator 407, connected to second operator network 405;
- A second gateway 408, connected to second access network 406;
- A third gateway 409, also connected to second access network 406;
- A home network 410;

Service source 100 provides services via operator network 102 and access network 103 and gateway 211 to the end user device 213. End user device 213 is adapted to get input commands from user 120, is adapted to request and receive a service list from service list aggregator 101, and is adapted to use services referenced in that list, provided by source 100, source 403, and devices connected to the gateways 408 and 409 connected to second access network 406.

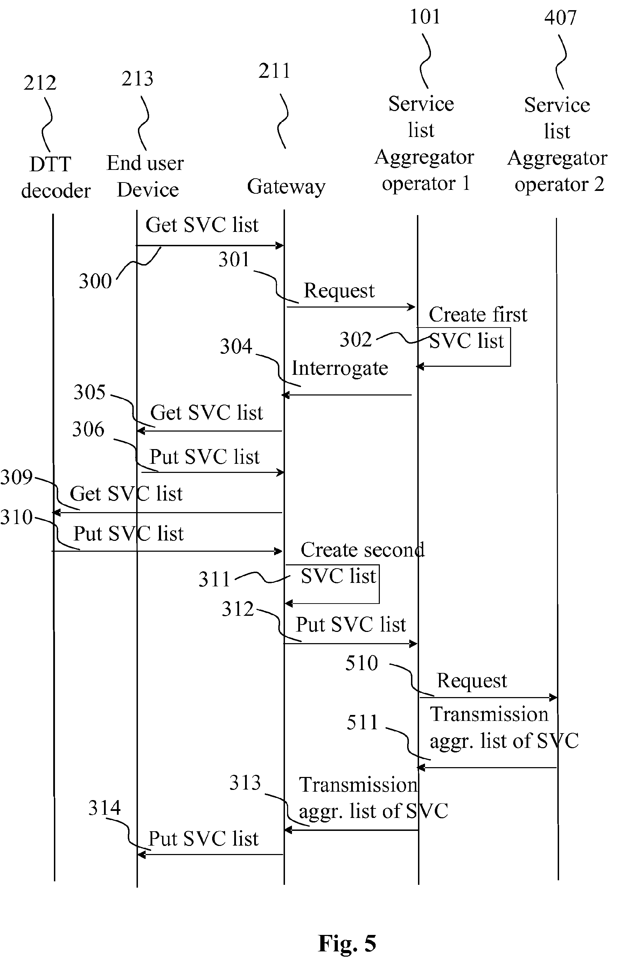

The dynamic cooperation between these devices in this second embodiment of the invention is illustrated by figure 5.

**Figure 5** shows sequence diagram of messages and operations of the devices illustrated in figure 4 according to a second embodiment of the invention. In this embodiment of the invention, a n end user device receives an aggregated list of services comprising references to services available from a first service source from a first operator, from a second service source from a second operator, and from a community connected to a first operator network.

The diagram comprises, from left to right:
- DTT decoder 212;
- End user device 213;
- Gateway 211;
- Service list aggregator 101 from operator 1; and
- Service list aggregator 407 from operator 2.

The references 300, 301, 302, 304, 305, 306, 309, 310, 311, 312, 313 and 314 have already been explained under figure 3 and thus are not detailed further here.

In this particular embodiment of the invention, the service list of end user device 213 comprises references to services provided by community devices connected to gateways 408 and 409, and a reference to services from a second, alternate operator 2. Therefore, after reception of this second list via message 312, the service list aggregator 101 transmits a request 510 for an aggregated list of service to aggregator 407, the service list aggregator 407 replies with a message 511. Next, service list aggregator 101 of operator 1 transmits an aggregated list of service to gateway 211, comprising references to services identified in first and at least one second list in a message 313. According to this embodiment, two second lists have been sent to service list aggregator 101: a second list of services from the gateway 211 via message 312, and another second list of services from service list aggregator 407 via message 511. Then, the gateway 211 sends an aggregated list of services to end user device 213.

This second embodiment thus illustrates the case where the step of transmission comprises a step of transmission, to an alternate operator, of a request 510 for an aggregated list of services associated to the user 120, the request 510 comprising information representative of the user 120 and information representative of an end user device 213 for using said aggregated list of services associated to said user 120 and a step of reception, via message 511, of said aggregated list of services comprising references to services available to the user via the alternate operator 2.

This sequence diagram also shows a method of reception of an aggregated list of services, with a step of transmission of a request 301 for an aggregated list of services associated to a user 120, comprising information representative of the user 120 and information representative of an end user device 213 for using the aggregated list of services associated to the user 120; a step of reception of a request 304, for a list of services associated to the user 120; a step of transmission 312 of a list services associated to the user 120; a step of reception 313 of said aggregated list, the aggregated list comprising references to services identified in the list 311 of services associated to said user 120 and references to operator-provided services.

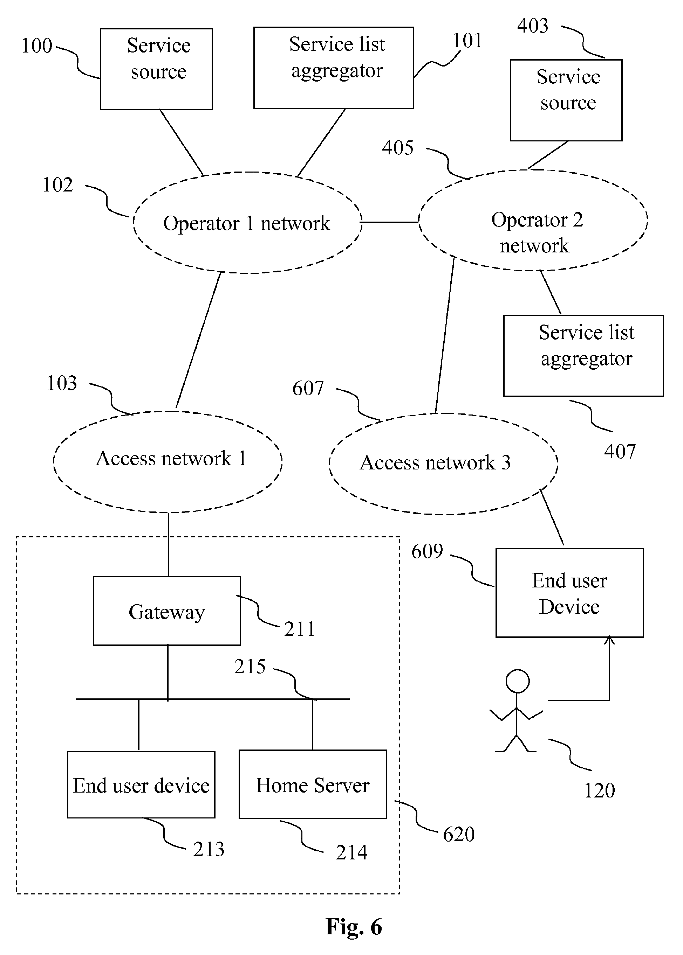

**Figure 6** shows a network infrastructure with home network compatible with the invention, where a user requests a list of services from a device connected to a second operator network, according to a third embodiment of the invention. The infrastructure comprises elements 100, 101, 102, 103, 120, 211, 213, 214, 215, 403, 405 and 407 that have already been described under previous figures and that execute a similar function here, and are thus not described further. The home network 620 comprises the same elements as described under figure 2 with the exception of DTT decoder server 212 that is not included in home network 620 in order to reduce the complexity of the figure.

The infrastructure comprises furthermore:
- An access network 3, with reference 607;
- An second end user device 609, connected to access network 3 with reference 607; and
- A home network 620.

A user 120 commands end user device 609 via an input means.

The first operator network comprises service source 100 and service list aggregator 101. It provides services and service lists to the devices connected to the first access network 103. These devices include the devices of the home network 620, namely gateway 211, end user device 213 and home server 214.

The second operator network 405 comprises service source 403 and service list aggregator 407. It provides services and service lists to the end user device 609 that is connected to the second access network 607.

In this third embodiment, user 120 is hosted by operator network 2 via end user device 609, but can access services associated to him, provided by service source 100 from "his" network operator 1, and from "his" end user devices on his home network 620, namely 211 (gateway), 213 (end user device) and 214 (home server).

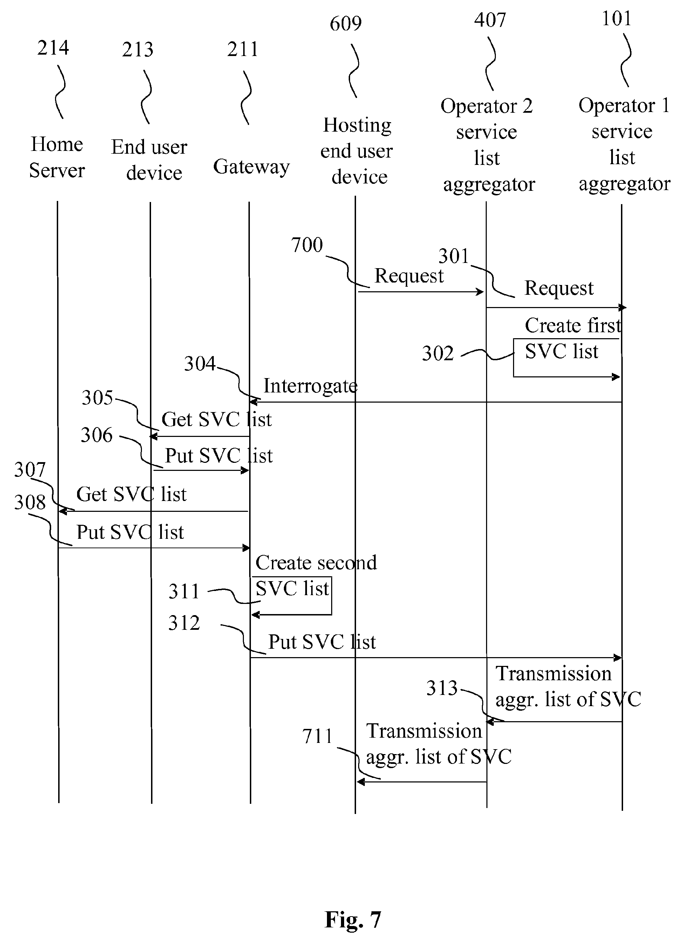

The dynamic cooperation between these devices according to this third embodiment of the invention is illustrated by figure 7.

**Figure 7** shows a sequence diagram of a third embodiment of the invention that uses the network infrastructure with home network from figure 6, and that comprises a step of interrogation of at least one device of the user.

The diagram comprises, from left to right:
- home server 214;
- end user device 213;
- gateway 211;
- hosting end user device 609;
- service list aggregator 407 from operator 2; and
- service list aggregator 100 from operator 1.

The sequence diagram starts with a request 700 for an aggregated list of services from hosting end user device 609 to service list aggregator 407 of operator 2. The service list aggregator 407 reads information representative of the user from the request, thereby allowing it to identify the user 120.

The service list aggregator 407, not having identified the user as a user of operator 2, forwards the request to service list aggregator 101 of operator 1 in a request 301.

The service list aggregator 101 of operator 1 reads information representative of the user from the request 301, thereby allowing it to identify the user 120. The service list aggregator 101 identifies the user 120 as a user from operator 1, and then reads information representative of an end user device from the request, allowing it to identify the end user device that is to use the aggregated list of services, in this case hosting end user device 609. Based on the identification of the user 120, the service list aggregator 101 creates a first service list, illustrated by 302. This first service list comprises references to operator 1 - provided services that are accessible to the user 120. After construction of this first service list, the service list aggregator 101 interrogates at least one device of the user 120 for at least one second list of services that is associated to the user 120, via message 304. Then, gateway 211 demands lists of services from end user device 213 with message 305 and from home server 214 with message 307. Their replies, containing references to services provided by these devices, are illustrated by messages 306 and 308, According to a particular embodiment, at least one reply message 306 or 308 is needed by gateway 211 for the creation of the second list if all replies have not been received after a timeout.

Upon reception of at least one of the reply messages 306 and 308 the gateway 211 creates a second list of services, illustrated by 311, This list is then sent to service list aggregator 101 with message 312. After having received the reply 312, the service list aggregator 101 transmits an aggregated list of services, comprising references to service identified in first and second lists to the service aggregator 407 in a message 313. Service aggregator 407 in turn transmits the message to hosting end user device 609 in a message 711.

According to a particular embodiment of the invention, the transmission of the aggregated list of services 313 to end user device 609 via service list aggregator 407 and message 711 comprises a step of filtering references to services, by service list aggregator 101, from the first service list created at 302 and the at least one second list created at 311.

According to a particular embodiment of the invention, this step of filtering comprises elimination of references to services that are identical. A service can be considered as identical for example, when a service is bit-wise the same, or when a service has the same name, or when a service represents the same content (for example a same tv program). Of course, any combination of these example criteria is possible.

According to a particular embodiment of the invention, the step of filtering comprises elimination of references to services that can not be used on the end user device 609 because they exceed the using capabilities of the device 609. For example, references to services refer to services that are encoded with an encoding algorithm that is not supported by device 609, or refer to services that are encoded with a variable bit rate encoding, that exceeds the using capability of device 609, because device only supports constant-bit rate encoded services. Or, references to services refer to text content in a format that is not supported by device 609.

According to a particular embodiment of the invention, the step of filtering comprises elimination of references to services that can not be used by device 609 because they exceed the transmission capabilities of the access network 607 to which device 609 is connected. For example, a service reference refers to a service that is encoded with a bit rate that exceeds the transmission capabilities of access network 607, or to a service from home server 214, that has a bit rate that is too high to be supported by the first access network 103.

This sequence diagram also shows the method of reception of an aggregated list of services, with a step of transmission of a request 700 for an aggregated list of services associated to a user 120, comprising information representative of the user 120 and information representative of an end user device 609 for using the aggregated list of services associated to the user 120; a step of reception of a request 304 for a list of services associated to the user 120; a step of transmission 312 of a list services associated to the user 120; a step of reception 711 of said aggregated list, the aggregated list comprising references to service identified in the list 311 of services associated to said user 120 and references to operator-provided services.

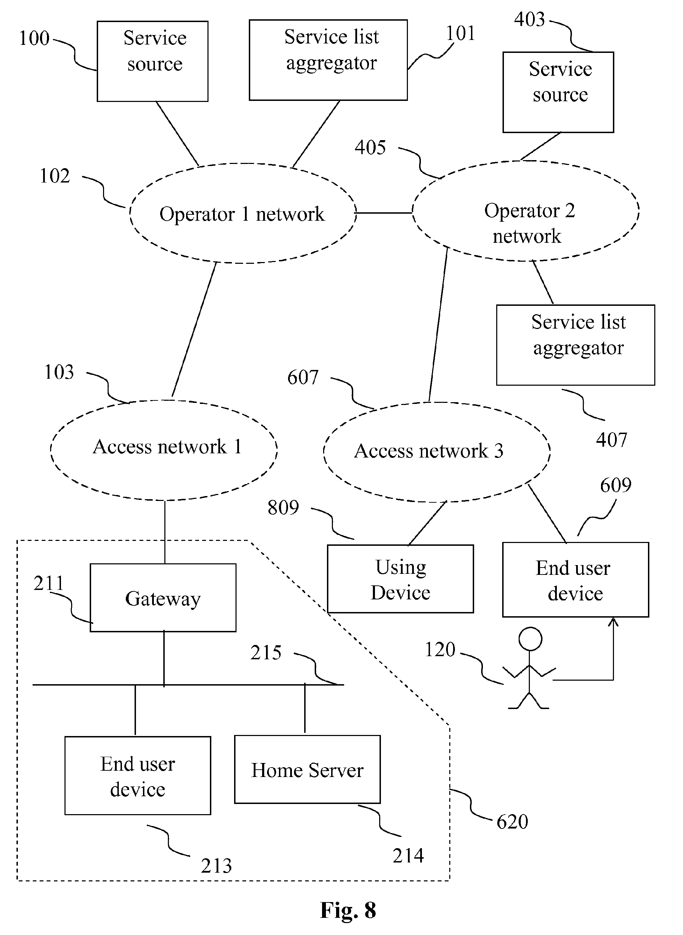

**Figure 8** shows a network infrastructure with home network, compatible with a fourth embodiment of the invention, where the device requesting an aggregated list of services is not the same device as the device that uses the service referenced in the aggregated list of services.

The infrastructure comprises elements 100, 101, 102, 103, 120, 211, 213, 214, 215, 403, 405, 407, 607, 609 and 620 that have already been described under previous figures and that execute a similar function here, and are thus not described further.

The infrastructure further comprises using device 809, connected to access network 3 with reference 607.

In this fourth embodiment, user 120 is hosted by operator network 2 via end user device 609, but can access services provided by service source 100 from "his" network operator 1, and from "his" end user devices 211 (gateway), 213 (end user device) and 214 (home server) on his home network. Furthermore, services referenced in an aggregated list of services received by device 609 are used on using device 809. Thus, the device requesting an aggregated list of service is not the same device as the device that uses the service referenced in the aggregated list of service. This is made possible by the inclusion of information allowing the identification of an end user device for using services listed in the aggregated list to the request for an aggregated list that device 609 transmits.

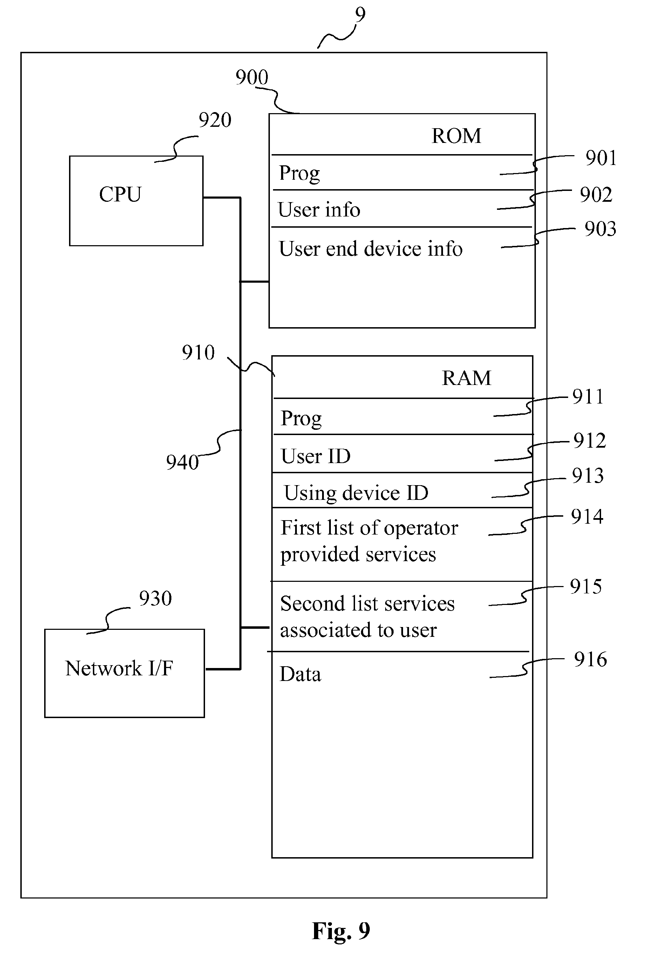

**Figure 9** shows a transmitting device 9 according a particular embodiment of the invention. The device 9 comprises the following elements, interconnected by an address and data bus 940:
- a microprocessor 920 (or CPU, for « Central Processing Unit ») ;
- a non-volatile memory of type ROM (« Read Only Memory ») 900 ;
- a read-write memory or RAM (« Random Access Memory ») 910 ; and
- a network interface 930.

At power-on, the microprocessor 920 copies a program corresponding to the instructions of the algorithm implementing the steps of the method of transmitting that is stored in the ROM 900 to RAM register 911 and executes them.

The network interface 930 allows the device to receive and send messages and data over a network connection.

The word « register » used in the description of memories 900 and 910 means a low-capacity memory zone (only some binary data) or a high-capacity memory zone (allowing the storage of an entire program or of a large amount of data).

Each of the registers in ROM 900 and RAM 910 can hold a variable number of data of variable size. The read-only memory 900 comprises:
- a register 901, where the program is stored ;
- a register 902, that is used to store information about users, such as user identifiers and access rights; and
- a register 903, that is used to store information about user end devices, such as device IDs, device address, and using capabilities.

The random-access memory 910 comprises:
- a register 911, used for storing the program ;
- a register 912, used for storing information representative of users, read from requests for aggregated list of services;
- a register 913, used for storing information representative of using devices;
- a register 914, used to store a first list of services provided by at least one operator;
- a register 915, used to store a second list of services associated to a user; and
- a register 916 that contains a data space needed for the functioning of the program stored in RAM register 911.

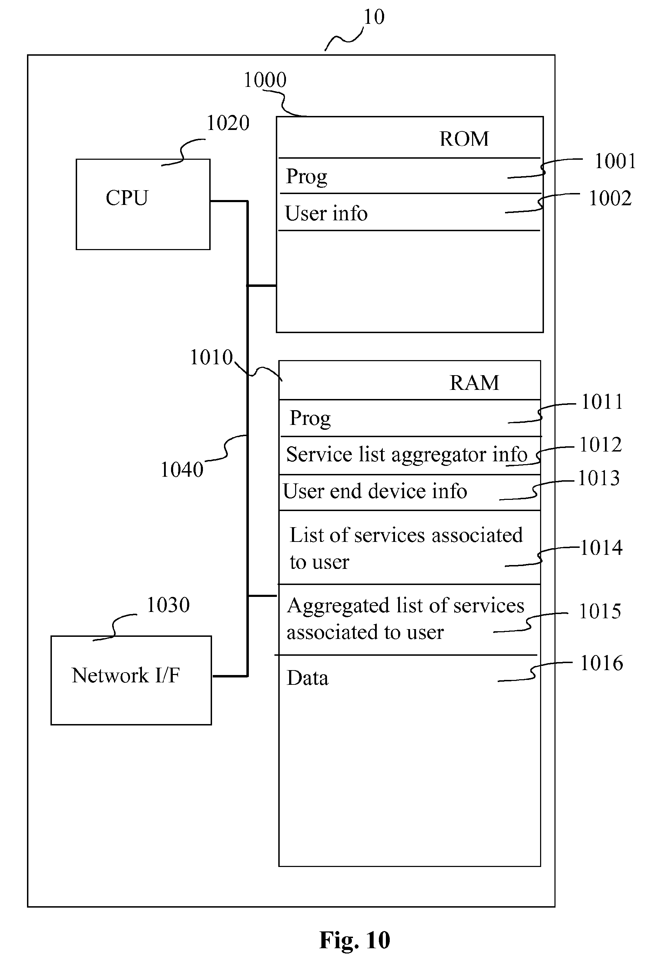

**Figure 10** shows a receiving device 10 according a particular embodiment of the invention. The device 10 comprises the following elements, interconnected by an address and data bus 1040:
- a microprocessor 1020 (or CPU, for « Central Processing Unit ») ;
- a non-volatile memory of type ROM (« Read Only Memory ») 1000 ;
- a read-write memory or RAM (« Random Access Memory ») 1010 ; and
- a network interface 1030.

At power-on, the microprocessor 1020 copies the program corresponding to the instructions of the algorithm implementing the steps of the method of reception that is stored in the ROM 1000 to RAM register 1011 and executes them.

The network interface 1030 allows the device to receive and send messages and data over a network connection.

The word « register » used in the description of memories 1000 and 1010 means a low-capacity memory zone (only some binary data) or a high-capacity memory zone (allowing the storage of an entire program or of a large amount of data).

Each of the registers in ROM 1000 and RAM 1010 can hold a variable number of data of variable size. The read-only memory 1000 comprises:
- a register 1001, where the program is stored that is copied to RAM register 1011 upon startup of the device;
- a register 1002, that is used to store information about users, such as user identifiers and access rights;

The random-access memory 1010 comprises:
- a register 1011, used for storing the program copied from ROM register 1001 and executed upon startup of the device;
- a register 1012, used for storing information representative of an operator device to which a request for an aggregated list of services can be transmitted;
- a register 1013, used for storing information representative of of an end device of the user, that can be used for using the aggregated list;
- a register 1014, used to store a list of services associated to the user;
- a register 1015, used to store an aggregated list of services associated to the user; and
- a register 1016 that contains a data space needed for the functioning of the program stored in RAM register 1011.

Other structures than that described by figures 9 and 10 are compatible with the invention. Particularly, according to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

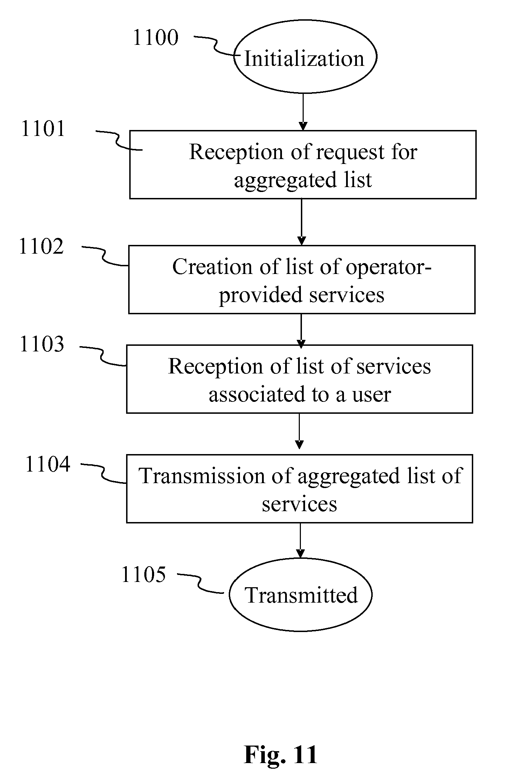

**Figure 11** shows an algorithm of transmitting according to a particular embodiment of the invention.

The algorithm starts with initialization step 1100, where all variables needed for the algorithm are initialized. In step 1101, a request for an aggregated list of services associated to a user is received. This request comprises information representative of a user and information representative of an end user device for using the aggregated list of services associated to the user. In step 1102, a first list is created of services provided by at least one operator and accessible for said user. In step 1103, at least a second list of services associated to the user is received; and in step 1104, an aggregated list of services is transmitted to the using device for using the aggregated list. The list comprises references to services identified in the first list and references to services identified in the at least a second list. The algorithm ends with step 1105.

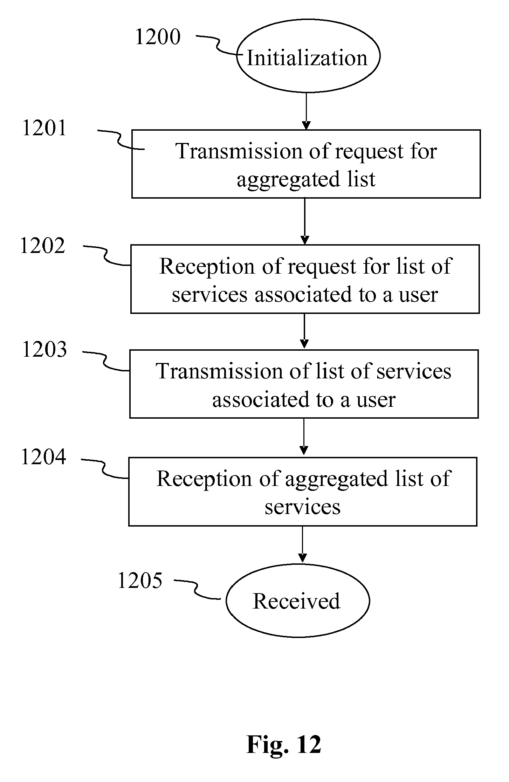

**Figure 12** shows an algorithm of reception according a particular embodiment of the invention.

The algorithm starts with initialization step 1200, where all variables needed for the algorithm are initialized.

In step 1201, a request for an aggregated list of services associated to a user is transmitted. This request comprises information representative of a user and information representative of an end user device for using the aggregated list of services associated to the user.

In step 1202, a request for a list of services associated to the user is received. In step 1203, a list of services associated to said user is transmitted. In step 1204, the aggregated list is received, the list comprises references to services identified in the list of services associated to the user and references to operator-provided services. The algorithm ends with step 1205.

Of course, the described embodiments are given as example embodiments of the invention, and thereby the invention is not limited to these embodiments.

For example, in a variant embodiment of the described second embodiment, there is a first operator connected to more than one alternate operators, in which case requests for aggregated lists of service are transmitted to all of these alternate operators, and all of these alternate operators transmit aggregated lists to the first operator's service list aggregator.

In yet another variant embodiment, the request messages and the transmissions to and from these alternate operators are forwarded from one alternate operator to another, instead of being sent directly to and from the first operator (this is cascading).

For example, in a variant embodiment of the described third embodiment, illustrated by figure 7, a service from operator 2 that is also available for user 120 is included in the list of services that is provided to that user. This is for example the case when the user subscribed to services from both operators 1 and 2.

The steps of the transmission and the reception method are not necessarily to be executed in the listed order. For example, with regard to the transmission method, the creation of a first service list can be postponed until just before the transmission step.

For example, a gateway linking at least one end user device via an access network to an operator, may have a built-in aggregator, that aggregates service lists from the user's devices. This aggregation may comprise a filtering step to remove references to services that are identical.

For example, an operator network can comprise more than one service list aggregator and zero, one or more service sources, as well as other devices needed for its functioning, such as transmitter equipment, traffic and billing management equipment, etc.

For example, a home network may comprise other end user devices than a DTT decoder, another end user device and a home server.

A home network can have a wireless character, for example through the use of Wi-Fi technology.

An end user device can be directly connected to an access network, such as an IPTV receiver connected to an ADSL network, or a mobile telephone connected to a 3GPP access network.

The invention is not limited to application in the field of the cited protocols and architectures, such as IP or IMS but equally concerns other proprietary or standardized protocols and architectures which enable the transmission and the reception of an aggregated list of services comprising references to services from a multitude of service sources which are associated to a user.

## Claims

1. Method of transmitting a list of services, **characterized in that** the method comprises the following steps:
- reception (1101) of a request for an aggregated list of services associated to a user, said request comprising information representative of said user and information representative of an end user device for using said aggregated list of services associated to said user;
- creation (1102) of a first list of services provided by at least one operator and accessible for said user;
- reception (1103) of said at least one second list of services associated to said user; and
- transmission (1104) to said end user device, of said aggregated list, said aggregated list comprising references to services identified in said first list and references to services identified in said at least one second list.

2. Method according to claim 1, wherein said method comprises an interrogation step of at least one device of said user for at least one second list of services associated to said user.

3. Method according to any of claims 1 to 2, wherein said step of transmission of said aggregated list comprises:
- a step of transmission, to at least an alternate operator, of a request for an aggregated list of services associated to said user, said request comprising information representative of said user and information representative of an end user device for using said aggregated list of services associated to said user; and
- a step of reception of said aggregated list of services comprising references to services available to said user via said alternate operator.

4. Method according to any of claims 1 to 3, wherein said request for an aggregated list comprises information allowing the identification an end user device for using services listed in said aggregated list.

5. Method according to any of claims 1 to 4, wherein said transmission step comprises a step of filtering references to services from said first and said at least one second list.

6. Method according to claim 5 wherein said step of filtering references to services comprises elimination of references to services that are identical.

7. Method according to any of claims 5 to 6, wherein said step of filtering references to services comprises elimination of references to services that can not be used on said end user device because they exceed the using capabilities of said end user device.

8. Method according to any of claims 5 to 7, wherein said step of filtering references to services comprises elimination of references to services that can not be used on said end user device because they exceed the transmission capabilities of a network to which said end user device is connected.

9. Method according to any of claims 5 to 8, wherein said step of filtering references to services comprises elimination of references to services that can not be provided to said end user device because said end user device does not have a protocol stack installed that is needed to use said services.

10. Method of reception of an aggregated list of services, **characterized in that** the method comprises the following steps:
- transmission (1201) of a request for aggregated list of services associated to a user, comprising information representative of said user and information representative of an end user device for using said aggregated list of services associated to said user;
- reception (1202) of a request for a list of services associated to said user;
- transmission (1203) of a list of services associated to said user; and
- reception (1204) of said aggregated list, said aggregated list comprising references to services identified in said list of services associated to said user and references to operator-provided services.

11. Method according to claim 10, wherein said request for an aggregated list comprises information allowing the identification of an end user device for using services listed in said aggregated list.

12. Method according to any of claims 10 to 11, wherein said transmission step comprises an aggregation step of references to services associated to said user.

13. Method according to any of claims 10 to 12, wherein said transmission step comprises a filtering step of references to services associated to said user.

14. Method according to claim 13, wherein said filtering step comprises elimination of references to services that are identical.

15. Method according to any of claims 13 to 14, wherein said filtering step comprises elimination of references to services that can not be used on said end user device because they exceed the using capabilities of said end user device.
